# EUROPEAN PATENT APPLICATION

(11) **EP 2 578 936 A1**
(43) Date of publication of application: **10.04.2013**
(21) Application number: 11789846.0
(22) Date of filing: 01.06.2011
(51) Int. Cl.: F23J 7/00, B01D 53/56, B05B 1/02, F23C 99/00

(54) **COMBUSTION APPARATUS PROVIDED WITH SPRAY NOZZLE**

(30) Priority: 01.06.2010 JP 2010125682
(71) Applicant: Babcock-Hitachi Kabushiki Kaisha, Chiyoda-ku Tokyo 101-0021 (JP)
(72) Inventor: OKAZAKI Hirofumi, Chiyoda-ku, Tokyo 100-8220 (JP); KURAMASHI Koji, Kure-shi Hiroshima 737-8508 (JP); OKIMOTO Hideo, Kure-shi Hiroshima 737-8508 (JP); IMOOKA Naoya, Kure-shi Hiroshima 737-8508 (JP); ORII Akihito, Chiyoda-ku, Tokyo 100-8220 (JP)
(74) Representative: Beetz & Partner
(86) International application number: PCT/JP2011/062570
(87) International publication number: WO 2011/152444

(57) **Abstract**

To provide a combustion apparatus provided with a spray nozzle (13) for enabling to spread atomized particles of reductant over a wide range in a furnace (1), uniformly mix combustion gas passing through the inside of the furnace (1) with the reductant, promote a reaction of the reductant to the combustion gas, and reduce the amount of nitrogen oxide discharged from the combustion apparatus.

The combustion apparatus provided with a spray nozzle (13) is structured so as to arrange a reductant supply system (14) for supplying liquid reductant for contributing to a reduction of nitrogen oxide contained in combustion gas into the furnace (1), install a spray nozzle (13) for spraying the reductant supplied from the reductant supply system (14) as atomized particles spreading into combustion gas passing through the inside of the furnace (1) on a wall surface of the furnace on a downstream side of the burner (2), and install a plurality of spray ports such as spray ports (30 and 31) for forming flat fan-shaped spray having different spread angles of the atomized particles of the reductant sprayed in the furnace at a leading edge of the spray nozzle (13).

## Description

### {Technical Filed}

The present invention relates to a combustion apparatus provided with a spray nozzle used as a combustion apparatus such as a power generation boiler for burning fuel.

### {Background Art}

In a combustion apparatus at a high output and a high load like a power generation boiler, a suspension firing system for horizontally burning fuel in a furnace of the boiler is most used. Particularly, when using solid fuel represented by coal as fuel, the solid fuel (coal) is pulverized to 0.1 mm or smaller in a particle diameter, is transferred by transfer gas such as air, and is burned in the furnace of the combustion apparatus. Further, when using liquid fuel like fuel oil, the fuel is atomized by spray nozzles and is burned in the furnace.

When fuel to be burned in the combustion apparatus at a high output and a high load like the power generation boiler contains much of nitrogen, the nitrogen is oxidized during fuel combustion to nitrogen oxide. Further, if the temperature in the furnace is high, nitrogen oxide generated due to oxidation of nitrogen in combustion air supplied together with the fuel, the so-called thermal NOX may be easily generated.

To reduce the nitrogen oxide (NOX) contained in combustion gas discharged from the combustion apparatus like the power generation boiler, various technologies such as application of a low NOX burner, two-stage combustion method, non-catalytic denitrification, and catalytic denitrification are proposed.

As one reduction method of NOX contained in combustion gas, there is a method of introducing reductant into the combustion gas available.

In U.S. Patent No. 4325924, a technology concerning an introduction method of a urea aqueous solution into air-insufficient combustion gas as reductant is disclosed. This technology introduces reductant into an air-insufficient region in the furnace and converts the NOX in the combustion gas to harmless nitrogen by the reductant. The reaction of generation of NOX is promoted if the combustion gas rises in temperature, so that it is desirable, when introducing reductant, to suppress cooling of the combustion gas.

In U.S. Patent No. 4842834, to promote the reaction of reduction of the NOX in the combustion gas, a technology concerning a supply method of a spray medium for atmizing the reductant supplied into the furnace is disclosed.

In U.S. Patent No. 5342592, a technology concerning a method of inserting a pipe having a cooling jacket into a heat transfer section on the downstream side of the furnace and injecting the reductant from many spray nozzles arranged on the pipe is disclosed. This technology arranges the spray nozzles so as to project into the combustion gas from the furnace wall and mixes the reductant for reducing the NOX in the combustion gas. Thus, the spray nozzles rise in temperature due to the combustion gas, so that it is necessary to cool the spray nozzles.

### {Citation List}

### {Patent Literature}

{PTL 1}
   U.S. Patent No. 4325924
{PTL 2}
   U.S. Patent No. 4842834
{PTL 3}
   U.S. Patent No. 5342592

### {Summary of Invention}

### {Technical Problem}

On the other hand, the technology of atmizing the reductant disclosed in U.S. Patent No. 4842834, as a reductant introduction method, sprays the reductant into the combustion gas using the spray medium.

However, a problem arises in this technology that it is difficult to permit the sprayed reductant to uniformly mix with the flowing-down combustion gas in a fixed mixture time.

Namely, if the reductant sprayed into the combustion gas spreads on the upstream side of the flowing-down combustion gas, on the upstream side, the temperature of the combustion gas is excessively high and the reaction time is excessively longer than the desired time. Further, if the sprayed reductant spreads on the downstream side of the flowing-down combustion gas, on the downstream side, the temperature of the combustion gas is excessively low and the reaction time is excessively shorter than the desired time.

As a result, the combustion gas and reductant do not uniformly mix with each other in the fixed mixture time and the reaction between the reductant and the combustion gas is not promoted sufficiently, so that a problem arises that it is difficult to reduce the nitrogen oxide discharged from the combustion apparatus.

An object of the present invention is to provide a combustion apparatus provided with a spray nozzle which can spread atomized particles of reductant over a wide range in a furnace, uniformly mix combustion gas passing through the inside of the furnace with the reductant, promote a reaction of the reductant to the combustion gas, and reduce the amount of nitrogen oxide discharged from the combustion apparatus.

### {Solution to Problem}

A combustion apparatus of the present invention comprising: a furnace, burners installed on a wall surface of a furnace for burning the fossil fuel, fuel supply system arranged to supply fuel to the burner, combustion gas supply system arranged to supply combustion gas to the burner and into the furnace, a heat exchanger installed in the furnace for exchanging heat between the combustion gas and water or steam, and a gas duct for discharging the combustion gas after heat exchanger from the furnace, wherein: reductant supply system for supplying liquid reductant to reduce nitrogen oxide contained in the combustion gas is arranged, spray nozzles for spraying the reductant supplied from the reductant supply system as atomized particles spreading into combustion gas passing through the inside of the furnace are installed on a wall surface of the furnace on a downstream side of the burner, and a spray port for spraying the atomized particles of the reductant sprayed in the furnace so as to form a spread shape thereof in a flat fan-shape is installed at a leading edge of the spray nozzle.

Further, a combustion apparatus of the present invention comprising: a furnace, burners installed on a wall surface of a furnace for burning the fossil fuel,
fuel supply system arranged to supply fuel to the burners, combustion gas supply system arranged to supply combustion gas to the burner and into the furnace, a heat exchanger installed in the furnace for exchanging between the combustion gas and water or steam, and a gas duct for discharging the combustion gas after heat exchanger from the furnace, wherein: reductant supply system for supplying liquid reductant to reduce nitrogen oxide contained in the combustion gas is arranged, spray nozzles for spraying the reductant supplied from the reductant supply system as atomized particles spreading into combustion gas passing through the inside of the furnace are installed on a wall surface of the furnace on a downstream side of the burner, and a plurality of spray ports for spraying the atomized particles of the reductant sprayed into the furnace so as to form spread shapes thereof in a flat fan-shape are installed at the leading edge of the spray nozzles and the plurality of spray ports are structured so as to have different angles of spread in a flat fan-shape which is a spread shape of the sprayed atomized particles.

### {Advantageous Effects of Invention}

According to the present invention, a combustion apparatus provided with a spray nozzle for enabling to spread atomized particles of reductant over a wide range in a furnace, uniformly mix combustion gas passing through the inside of the furnace with the reductant, promote a reaction of the reductant to the combustion gas, and reduce the amount of nitrogen oxide discharged from the combustion apparatus can be realized.

### {Brief Description of Drawings}

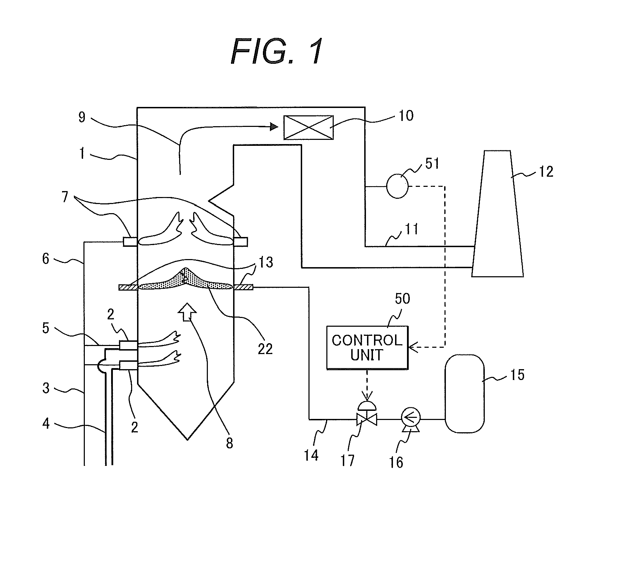

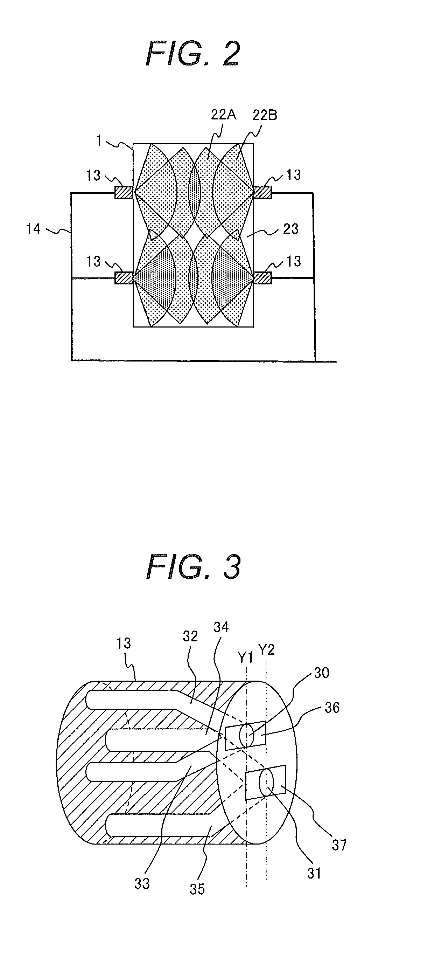

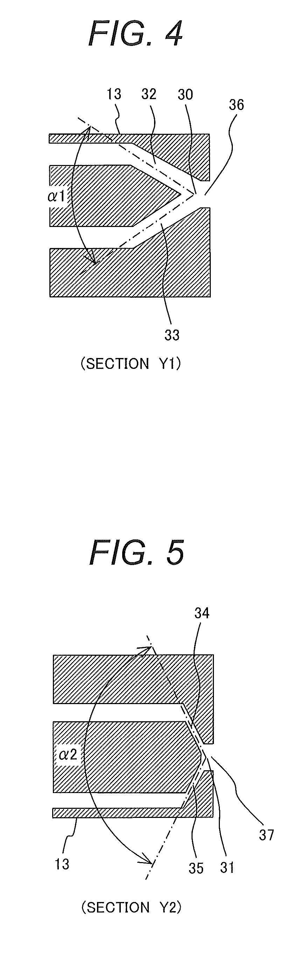

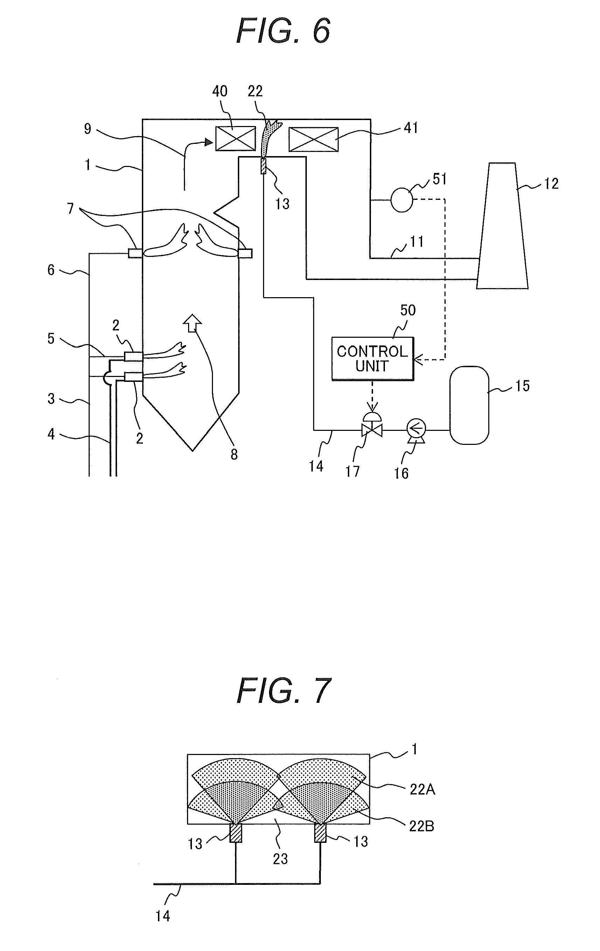

{Fig. 1} Fig. 1 is an entire schematic view showing the combustion apparatus provided with the spray nozzles which is the first embodiment of the present invention.
{Fig. 2} Fig. 2 is an illustration showing the distribution of atomized particles in the section of the furnace which are sprayed from the spray nozzles included in the combustion apparatus of the first embodiment shown in Fig. 1.
{Fig. 3} Fig. 3 is a structural diagram showing, in detail, the spray nozzles included in the combustion apparatus of the first embodiment shown in Fig. 1.
{Fig. 4} Fig. 4 is a cross-sectional view of the spray nozzles shown in Fig. 3 in the Y1 direction.
{Fig. 5} Fig. 5 is a cross-sectional view of the spray nozzles shown in Fig. 3 in the Y2 direction.
{Fig. 6} Fig. 6 is an entire schematic view showing the combustion apparatus provided with the spray nozzles which is the second embodiment of the present invention.
{Fig. 7} Fig. 7 is an illustration showing the distribution of atomized particles in the section of the furnace which are sprayed from the spray nozzles included in the combustion apparatus of the second embodiment shown in Fig. 6.

### {Description of Embodiments}

The combustion apparatus provided with the spray nozzles which is an embodiment of the present invention will be explained below by referring to the drawings.

### {Example 1}

A power generation boiler which is the combustion apparatus provided with the spray nozzles which is the first embodiment of the present invention will be explained below by referring to Figs. 1 to 5.

As the combustion apparatus provided with the spray nozzles which is the first embodiment of the present invention, the entire structure of the power generation boiler is shown in Fig. 1 and regarding the atomized particles sprayed from the spray nozzles installed on the wall surface of the furnace of the power generation boiler, the distribution state of the atomized particles in the section of the furnace at the installation height of the spray nozzles is shown in Fig. 2.

In the power generation boiler which is the combustion apparatus provided with the spray nozzles which is the first embodiment of the present invention shown in Fig. 1, a plurality of burners 2 for supplying fuel and combustion air into the furnace 1 and a plurality of air supply ports 7 positioned on the downstream side of the burners 2 for supplying air into the furnace 1 are respectively installed on the wall surface of a furnace 1 configuring the power generation boiler.

On the burners 2, a combustion air supply system 3 for supplying combustion air and a fuel supply system 4 for supplying combustion fuel are arranged so as to be connected.

In the combustion air supply system 3, a pipe 5 connected to the burners 2 midway thereon for supplying combustion air and a pipe 6 connected to the air supply ports 7 on the downstream side thereof for supplying combustion air are arranged so as to respectively branch.

On each of the pipes 5 and 6, a flow rate control valve (not drawn) for controlling the flow rate of combustion air to be supplied is installed.

To the burners 2, the fuel supply system 4 for supplying fuel is connected, though when using, as fuel, solid fuel such as coal for the fuel supply system 4, on the upstream side of the fuel supply system 4, a solid fuel hopper and a mill (both are not drawn) are installed and simultaneously, a supply system (not drawn) for supplying solid fuel transfer gas for transferring the solid fuel is connected.

Further, when using, as fuel, liquid fuel such as heavy oil for the fuel supply system 4, to the liquid fuel supply system 4, a supply system (not drawn) of a spray medium used for fuel spray is connected.

In the power generation boiler, combustion air is supplied from the combustion air supply system 3 by branching to the pipe 5 and pipe 6 and is injected into the furnace 1 from the burners 2 and the air supply port 6.
Combustion air supplied from the burners 2 is supplied in a smaller air volume than the theoretical air volume necessary for perfect combustion of fuel, thus in the vicinity of the burners 2 in the furnace 1, a reductive region of combustion under the insufficient air conditions is formed.

Therefore, combustion gas 8 generated by burning fuel inside the furnace 1 passes through the reductive region formed in the vicinity of the burners 2 in the furnace 1 upward from the upstream side to the downstream side.

And in the reductive region, in the combustion gas 8, a reaction of generation of a part of nitrogen included in fuel as reductant and reduction of NOX generated due to combustion by the burners 2 to nitrogen is caused.

As a result, the NOX concentration contained in the combustion gas 8 at the exit of the furnace 1 is reduced compared with the case of supplying all the combustion air from the burners 2. And, the residual combustion air is supplied from the air supply ports 7 for perfect combustion of fuel, thus the unburned fuel contained in the combustion gas 8 is reduced.
Combustion gas 9 mixed with combustion air supplied from the air supply ports 7 is structured so as to exchange heat with a heat exchanger 10 installed on the upper portion of the furnace 1, thereby generate steam, passing down through the heat exchanger 10, then passes through a gas duct 11, and is discharged into the atmosphere from a chimney 12.

The steam generated by the heat exchanger 10 is supplied to a steam turbine (not drawn) as drive steam.

In the power generation boiler, at the position of the wall surface of the furnace 1 between the burners 2 installed on the wall surface of the furnace 1 and the air supply ports 7, spray nozzles 13 for injecting the reductant of the NOX into the furnace 1 are arranged.

As reductant injected from the spray nozzles 13, for example, liquid reductant such as a urea aqueous solution for generating ammonia (NH3) by heating is used and the reductant is atmized by the spray nozzles 13 and is mixed, as atomized particles, with the combustion gas 8 passing through the furnace 1.

In this case, the reduction of the NOX contained in the combustion gas 8 due to the reductant supplied from the spray nozzles 13, for example, uses the reductive reactions of Formulas (1) and (2) indicated below using the OH radical contained in the combustion gas 8.

NH₃+OH → NH₂ + H₂O (1)

NH₂+NO → N₂+H₂O (2)

To permit the spray nozzles 13 to atmize the reductant to atomized particles, to the spray nozzles 13, a reductant supply system 14 for supplying the reductant to the spray nozzles 13 from a tank 15 is connected.

The reductant supplied from the tank 15 to the spray nozzles 13 is supplied in a necessary amount via a boost pump 16 and a flow rate regulator 17 which are installed in the reductant supply system 14.

A control unit 50 for controlling the opening angle of the flow rate regulator 17 is installed and to the control unit 50, a detection signal of the NOX concentration contained in the combustion gas 9 which is measured by an NOX concentration detector 51 installed at the exit of the furnace 1 is input.

The control unit 50 outputs a flow rate signal of the reductant calculated on the basis of a deviation signal obtained by comparison of the detection signal of the NOX concentration measured by the NOX concentration detector 51 with the NOX set value to the flow rate regulator 17 as a command value and operates the opening angle of the flow rate regulator 17, regulates the flow rate of the reductant, thereby controls the flow rate of the reductant sprayed from the spray nozzles 13 into the furnace 1.

The atomized particles of the reductant sprayed from the spray nozzles 13 are mixed with the combustion gas 8 in the reductive region formed in the furnace 1 between the burners 2 and the air supply ports 7.

In the reductive region in the furnace 1, when supplying a urea aqueous solution as reductant from the spray nozzles 13, the urea aqueous solution is decomposed to an NH radical and it reacts with the NOX in the combustion gas 8, thereby generates nitrogen.

The reaction of the NH radical to the NOX in the combustion gas 8 proceeds as the temperature rises. Further, if oxygen exists, the reaction of oxidizing the NH radical to NOX proceeds. Therefore, when the spray nozzles 13 are installed in the vicinity of the burners 2 in the furnace 1, it is desirable to supply reductant to a reductive region of very little oxygen from the spray nozzles 13.

In the combustion apparatus provided with the spray nozzles of this embodiment, when atmizing the reductant from the spray nozzles 13 installed in the furnace 1 of the power generation boiler and spraying it into the furnace 1, the flat fan-shaped spray 22 for expanding the atomized particles of the reductant sprayed from the spray nozzles 13 in the orthogonal direction (the horizontal direction to the furnace 1) to the flow of the combustion gas 8 upward passing through the furnace 1 is formed and sprayed.

In the spray nozzles 13 of this embodiment, the atomized particles of the reductant sprayed from the spray nozzles 13 become the atmized flat fan-shaped spray 22 and spread and are sprayed into the reductive region in the furnace 1 in the orthogonal direction to the combustion gas 8 flowing down, so that the atomized particles of the reductant do not spread on the upstream side and the downstream side outside the orthogonal direction of the combustion gas 8 flowing down.

Therefore, in the range of the flat fan-shaped spray 22, the combustion gas 8 and the atomized particles of the reductant to be mixed are uniformly mixed in the fixed mixture time, so that the concentration of the atomized particles of the reductant to be mixed with the combustion gas 8 can be made uniform.

Further, the atomized particles of the reductant are sprayed to the combustion gas 8 flowing down so as to form the flat fan-shaped spray 22, thus the mixture time of the atomized particles with the combustion gas 8 can be fixed.
The reductant sprayed from the spray nozzles 13 is sprayed so as to form the flat fan-shaped spray 22, thus the flow of combustion air supplied from the burners 2 located on the upstream side of the spray nozzles 13, the air supply ports 7 on the downstream side of the spray nozzles 13, and the atomized particles can be avoided from interference to each other.

The mixture time of the atomized particles of the reductant sprayed from the spray nozzles 13 with the combustion gas 8 is fixed, so that the reaction of the reductant to the combustion gas 8 is promoted and nitrogen oxide discharged from the combustion apparatus can be reduced.

Further, as the spray nozzles 13 used in this embodiment, a pressure spray-type nozzle for atmizing a spray fluid by the pressure of the fluid is desirable. When using such a pressure spray-type nozzle, a spray medium used for atmization is unnecessary.

By the spray nozzles 13, only reductant is supplied into the furnace 1, so that compared with the case of using a spray medium, the reduction of the temperature of the combustion gas 8 can be suppressed. Therefore, the reaction of the reductant to the combustion gas is promoted and nitrogen oxide discharged from the combustion apparatus can be reduced more.

As the spray nozzles 13 used in this embodiment, as shown in Figs. 3 to 5, use of the spray nozzle 13 having a plurality of injection ports 30 and 31 is preferable.

The spray nozzles 13 used in this embodiment, as shown in Fig. 2, on the wall surface of the furnace 1, are arranged in opposition to each other, and form the atomized particles of the reductant sprayed from the two injection ports 30 and 31 installed in the respective spray nozzles 13 as flat fan-shaped spray 22A in a spray pattern having a narrow spread angle and flat fan-shaped spray 22B in a spray pattern having a wide spread angle, and inject them into the furnace 1.

Namely, the spray nozzles 13 used in this embodiment, as shown in Figs. 3 to 5, form the atomized particles sprayed, among the two injection ports 30 and 31 installed in the respective spray nozzles 13, from the one-side injection port, for example, the injection port 30 as spray in a spray pattern of the flat fan-shaped spray 22A having a narrow spread angle and the atomized particles sprayed from the other-side injection port 31 as spray in a spray pattern of the flatter fan-shaped spray 22B having a wide spread angle.

The fan-shaped spread angle in the spray pattern of the flat fan-shaped spray 22A having a narrow spread angle is desirably set to 30° to 80°.

Further, the fan-shaped spread angle in the spray pattern of the flat fan-shaped spray 22B having a wide spread angle is desirably set to 90° to 160°.

Further, with respect to the flat state in the flat fan shape, the flat thickness is desirably formed in about 1/3 or less of the maximum spread widths of the fan-shaped sprays 22A and 22B.

As mentioned above, in the furnace 1, the spray nozzles 13 equipped with the plurality of injection ports 30 and 31 for forming the two spray patterns in the shapes of the flat fan-shaped sprays 22A and 22B having different spread angles at the leading edges are installed, so that over the wide space in the furnace 1, atomized particles of uniform concentration can be supplied. Therefore, the region of space 23 between the adjacent spray nozzles 13 in the furnace 1 where no atomized particles are supplied can be narrowed.

Namely, the reductant is sprayed in the spray pattern of the flat fan-shaped spray 22A having a narrow spread angle of spray from the one-side injection port 30 of the spray nozzles 13, thus the reductant can be supplied to the central portion of the furnace 1.

Further, the reductant is sprayed in the spray pattern of the flat fan-shaped spray 22B having a wide spread angle of spray from the other-side injection port 31 of the spray nozzles 13, thus the reductant can be supplied to the vicinity of the wall surface of the furnace 1 where the spray nozzles 13 are installed.

To execute spray at a wide spread angle of spray, it is desirable to form atomized particles in the shape of the flat fan-shaped spray 22B in the furnace 1 by the atomized particles injected from the injection port 31 which is the other-side injection port.

The shape of the fan-shaped spray 22B formed in the furnace 1 becomes flatter, so that the atomized particles in the spray pattern of the flat fan-shaped spray 22B having a wide spread angle injected from the other-side injection port 31 hardly interfere with the atomized particles in the spray pattern of the flat fan-shaped spray 22A having a narrow spread angle injected from the one-side injection port 30.

In the case of spray having a narrow spread angle of spray, the spread angle is small, so that the interference of the atomized particles is hardly caused. Therefore, in addition to the flat fan-shaped spray, conical spray is also available.

Furthermore, as the spray nozzles 13 of this embodiment, among the plurality of injection ports 30 and 31 installed at the leading edges, from the injection port for generating the spray pattern of the flat fan-shaped spray 22B having a wide spread angle of spray, for example, the injection port 31, as particles of the reductant to be sprayed, it is desirable to inject atomized particles with a small diameter.

For example, as a small diameter of atomized particles, a particle diameter of about 50 µm to 150 µm is desirable. When the atomized particle diameter is small, the momentum of the atomized particles is small and the arrival distance is short, so that the atomized particles stay in the vicinity of the wall surface of the furnace 1.

On the other hand, from the injection port for generating the spray pattern of the flat fan-shaped spray 22A having a narrow spread angle, for example, the injection port 30, as particles of the reductant to be sprayed, it is desirable to inject atomized particles with a large diameter.

For example, as a large diameter of atomized particles, a particle diameter of about 200 µm to 500 µm is desirable. When the atomized particle diameter is large, the momentum of the atomized particles is large and the arrival distance is long, so that the atomized particles easily reach the central portion of the furnace 1.

By referring to Figs. 3 to 5, the structure of the spray nozzles 13 suitable for the combustion apparatus provided with the spray nozzles which is this embodiment will be explained in detail below.

Fig. 3 is a schematic structural diagram showing the structure of the spray nozzles 13 of this embodiment, and Fig. 4 is a cross-sectional view of the spray nozzles 13 shown in Fig. 3 in the Y1 direction, and Fig. 5 is a cross-sectional view of the spray nozzles 13 shown in Fig. 3 in the Y2 direction.

At the leading edges of the spray nozzles 13 shown in Figs. 3 to 5, as mentioned above, the two injection ports 30 and 31 are installed. Inside each nozzle of the spray nozzles 13, a flow path 32 and a flow path 33 opposite to the injection port 30 are arranged, and the flow paths 32 and 33 join in the injection port 30, and an injection flow is sprayed form a groove 36 into the furnace 1.

The flow paths 32 and 33 are arranged so as to form a V-shape at a cross angle of α1 in the vicinity of the leading edge of the spray nozzle 13 to permit them to join in the injection port 30 formed at the leading edge of the spray nozzle 13. Further, the flow paths 32 and 33 are connected to the reductant supply system 14 on the upstream side thereof.

And, at the leading edge of the spray nozzle 13, so as to internally include the injection port 30, a groove 37 is formed perpendicularly to the direction of the flow paths 32 and 33.

The reductant spray fluid passing through the spray nozzle 13 passes through the flow paths 32 and 33, mutually collides in the injection port 30, and forms a liquid film spreading in a flat fan-shape from the spray nozzle 13 toward the groove 36 and the liquid film is separated to liquid drops and forms spray which becomes the flat fan-shaped spray 22A having a narrow spread angle sprayed into the furnace 1.

Similarly, a flow path 34 and a flow path 35 opposite to the injection port 31 are arranged, and the flow paths 34 and 35 join in the injection port 31, and an injection flow is sprayed from the groove 37 into the furnace 1.

The flow paths 34 and 35 are arranged so as to form a V-shape at a cross angle of α2 in the vicinity of the leading edge of the spray nozzle 13 to permit them to join in the injection port 31 formed at the leading edge of the spray nozzle 13. Further, the flow paths 34 and 35 are connected to the reductant supply system 14 on the upstream side thereof.

And, at the leading edge of the spray nozzle 13, so as to internally include the injection port 31, the groove 36 is formed perpendicularly to the direction of the flow paths 34 and 35.

The reductant spray fluid passing through the spray nozzle 13 passes through the flow paths 34 and 35, mutually collides in the injection port 31, and forms a liquid film spreading in a flat fan-shape toward the groove 37 and the liquid film is separated to liquid drops and forms spray which becomes the flat fan-shaped spray 22B having a wide spread angle sprayed into the furnace 1.

The spread angle of the atomized particles of the reductant to be sprayed respectively from the injection ports 30 and 31 which are formed at the leading edge of the spray nozzle 13 can be set different from each other depending on the cross angle of α1 in the V-shape formed by the flow paths 32 and 33 and the cross angle of α2 in the V-shape formed by the flow paths 34 and 35. When intending to widen the spread angle of the atomized particles, it is desirable to large set the cross angle of α2 in the V-shape formed by the flow paths 34 and 35 and when intending to narrow the spread angle of the atomized particles, it is desirable to small set the cross angle of α1 in the V-shape formed by the flow paths 32 and 33.

Further, in the spray nozzles 13 shown in Figs. 3 to 5, the case that the injection ports 30 and 31 have the same size is shown, though the size is changed, thus the flow rate of the one-side injection port can be made higher than the flow rate of the other-side injection port. Further, three or more injection ports can be formed.

In the combustion apparatus provided with the spray nozzles of this embodiment aforementioned, from the spray nozzles 13 installed on the wall surface of the furnace 1, the atomized particles of the reductant are sprayed into the furnace 1 in the shape of flat fan-shaped spray, thus the injection flow of the reductant sprayed perpendicularly to the flow of the combustion gas 8 passing through the furnace 1 spreads in the orthogonal direction and mixes with the combustion gas 8. The atomized particles of the reductant are sprayed to the flowing-down combustion gas 8 from the spray nozzles 13 in the flat fan shape, so that in the flat fan shape range sprayed, the concentration of the reductant of the atomized particles mixed with the combustion gas 8 can be made uniform.

The atomized particles of the reductant are sprayed into the furnace 1 in the flat fan shape, thus the reductant does not spread on the upstream side and downstream side of the combustion gas 8, so that the mixture time of the atomized particles of the reductant with the combustion gas 8 can be fixed.

Furthermore, the flow of combustion air supplied from the burners 2 located on the upstream side of the spray nozzles 13, the air supply ports 7 on the downstream side, and the atomized particles of the reductant do not interference to each other, so that the reaction of the reductant to the combustion gas 8 is promoted and the concentration of nitrogen oxide contained in the combustion gas discharged from the combustion apparatus can be reduced.

Further, as the spray nozzles 13, when using a pressure spray-type nozzle for atmizing a spray fluid by pressure of the fluid, the spray medium used for atmization of the reductant is unnecessary. Therefore, into the furnace 1, only the reductant is supplied, so that compared with the case of use of the spray medium, the reduction of the temperature of the combustion gas can be suppressed, and the reaction of the reductant to the combustion gas is promoted, and the nitrogen oxide contained in the combustion gas discharged from the combustion apparatus can be reduced.

It is desirable that each of the spray nozzles 13 includes a plurality of injection ports 30 and 31 at its leading edge. From the plurality of injection ports 30 and 31, in the shapes of flat fan-shaped spray having a narrow spread angle and flat fan-shaped spray having a wide spread angle which are different in the spray pattern from each other, atomized particles are respectively formed, and the reductant is injected into the furnace 1, thus the space between the plurality of spray nozzles 13 where no atomized particles are supplied can be narrowed.

Namely, from the injection port 31 formed in each of the spray nozzles 13, in the shape of flat fan-shaped spray having a wide spread angle of spray, the atomized particles of the reductant is sprayed, thus the atomized particles of the reductant can be supplied to the vicinity of the wall surface of the furnace where the spray nozzles 13 are installed.

From the one-side injection port 30 formed in each of the spray nozzles 13, in the shape of flat fan-shaped spray having a narrow spread angle of spray, the atomized particles of the reductant is sprayed, thus the reductant can be supplied to the central portion of the furnace 1.

In the above case, as spray having a wide spread angle of spray for spraying the atomized particles of the reductant from the spray nozzles 13, it is desirable to spray in the shape of flat fan-shaped spray. The shape of the atomized particles sprayed is a flat fan shape, so that the atomized particles hardly interfere with the atomized particles injected from the other-side injection port 31. Further, in the case of spray having a narrow spread angle of spray, the spread angle is narrow, so that the interference of the atomized particles is hardly caused. Therefore, in addition to the flat fan-shaped spray, conical spray is also available.

As the spray nozzles 13, among the plurality of injection ports 30 and 31 installed at the leading edges of the spray nozzles 13, it is desirable that from the one-side injection port 31, compared with the other-side injection port 30, atomized particles with a smaller diameter are injected at a wide spread angle of spray. When the atomized particle diameter is small, the momentum of the atomized particles is small and the arrival distance is short. Therefore, the atomized particles stay in the vicinity of the wall surface of the furnace 1.

On the other hand, when injecting atomized particles with a large atomized particle diameter at a narrow injection angle, the momentum of the atomized particles is large and the arrival distance is long. Therefore, the atomized particles easily reach the central portion of the furnace 1.

The spray nozzles 13 including the plurality of injection ports 30 and 31 are used, thus by very few spray nozzles, the reductant can be uniformly supplied into the furnace 1, and the reaction of the NOX in the combustion gas in the furnace 1 to the reductant is promoted, and the NOX contained in the combustion gas discharged from the combustion apparatus can be reduced.

According to this embodiment, a combustion apparatus provided with the spray nozzles for enabling to spread the atomized particles containing the reductant over a wide range in the furnace, uniformly mix the combustion gas passing through the inside of the furnace with the reductant, promote a reaction of the reductant to the combustion gas, and reduce the amount of nitrogen oxide discharged from the combustion apparatus can be realized.

### {Example 2}

Next, a power generation boiler which is the combustion apparatus provided with spray nozzles which is the second embodiment of the present invention will be explained below by referring to Figs. 6 and 7.

The combustion apparatus provided with the spray nozzles which is the second embodiment of the present invention has the basic constitution equal to that of the combustion apparatus provided with the spray nozzles which is the first embodiment, so that the explanation of the constitution common to the two is omitted and only the different constitution will be explained below.

In the power generation boiler which is the combustion apparatus provided with the spray nozzles of the second embodiment of the present invention shown in Figs. 6 and 7, the spray nozzles 13 are arranged between a heat exchanger 40 and a heat exchanger 41 installed on the top of the furnace 1. The steam generated by the heat exchangers 40 and 41 is supplied to a steam turbine (not drawn) as drive steam.

In the combustion apparatus provided with the spray nozzles of this embodiment, in combustion gas 9 after fuel is perfectly burned by combustion air supplied into the furnace 1 from the burners 2 and the air supply ports 7, from the spray nozzles 13 arranged on the wall surface of the furnace 1 in the region where the temperature of the combustion gas 9 just becomes 900°C to 1100°C between the heat exchanger 40 and the heat exchanger 41, an injection flow of the reductant is supplied into the furnace 1.

Also in this embodiment, the reduction of the NOX contained in the combustion gas 9 due to the reductant supplied from the spray nozzles 13 uses the reductive reaction of Formula (3) indicated below which is caused in the presence of oxygen.

4NH₃ + 4 N O + O₂ → 4N₂ + 6H₂o (3)

The above reductive reaction is active in the region of 900°C to 1100°C, so that spray of the reductant from the spray nozzles 13 must be mixed with the combustion gas 9 in the above temperature region.

In the combustion apparatus provided with the spray nozzles of this embodiment shown in Fig. 7, the reductant sprayed from the spray nozzles 13 forms and sprays the flat fan-shaped spray 22 expanding in the orthogonal direction to the flow of the combustion gas 9.

In the spray nozzles 13 of this embodiment, the reductant sprayed from the spray nozzles 13 becomes the atmized flat fan-shaped spray 22 and is sprayed into the furnace 1, so that the atomized particles of the reductant do not spread on the upstream side and the downstream side of the combustion gas 9. Therefore, in the range of the flat fan-shaped spray 22, the concentration of the reductant mixed with the combustion gas 9 can be made uniform.

Further, the reductant is sprayed as the flat fan-shaped spray 22, thus the mixture time and temperature of the atomized particles with the combustion gas 9 can be fixed.

Furthermore, the atomized particles for forming the flat fan-shaped spray 22 sprayed from the spray nozzles 13 do not interfere with the heat exchangers 40 and 41 positioned on the upstream side and downstream side of the spray nozzles 13, so that the reaction of the reductant to the combustion gas 9 is promoted, and the nitrogen oxide discharged from the combustion apparatus can be reduced.

Further, as the spray nozzles 13 used in this embodiment, in addition to the pressure spray-type nozzle for atmizing a spray fluid by the pressure of the fluid, a method using steam or air as an atmization medium can be used.

However, when using the atmization medium, the atmization medium is supplied into the furnace, so that the temperature of the combustion gas 9 falls and the heat transfer efficiency in the furnace 1 is reduced. Therefore, if possible, it is desirable to use the pressure spray-type nozzle.

As the spray nozzles 13 used in this embodiment, similarly to the spray nozzles 13 in the first embodiment, the spray nozzles 13 including the plurality of injection ports 30 and 31 having the constitution shown in Figs. 3 to 5 are used. The structure of the spray nozzles 13 is the same as that of the spray nozzles 13 of the first embodiment shown in Figs. 3 to 5, so that the explanation thereof will be omitted.

Also in the spray nozzles 13 of this embodiment, spray injected from the one-side injection port 30 among the plurality of injection ports formed at the leading edges of the spray nozzles 13 is spray in the spray pattern for forming the flat fan-shaped spray 22A having a narrow spread angle and spray injected from the other-side injection port 31 is spray in the spray pattern for forming the flatter fan-shaped spray 22B having a wide spread angle.

As mentioned above, the two spray patters for respectively forming the flat fan-shaped spray 22A and 22B different in the spread angle are respectively formed in the spray nozzles 13, thus into the wide space in the furnace 1, atomized particles can be supplied. Therefore, the space 23 between the adjacent spray nozzles 13 where no atomized particles are supplied can be narrowed.

Namely, the reductant is sprayed in the spray pattern of the flat fan-shaped spray 22A having a narrow spread angle of spray from the one-side injection port 30 of the spray nozzles 13, thus the reductant can be supplied to the central portion of the furnace 1.

Further, the reductant is sprayed in the spray pattern of the flatter fan-shaped spray 22B having a wide spread angle of spray from the other-side injection port 31 of the spray nozzles 13, thus the reductant can be supplied to the vicinity of the wall surface of the furnace 1 where the spray nozzles 13 are installed.

To spray, from the injection port 31, an injection flow of the reductant so as to spread the spread angle of spray, it is desirable to form the flatter fan-shaped spray 22B.

Thus, the shape of the fan-shaped spray 22 becomes flatter, so that the atomized particles in the spray pattern of the flatter fan-shaped spray 22B having a wide spread angle which are sprayed from the injection port 31 of the other-side injection port hardly interfere with the atomized particles in the spray pattern of the flat fan-shaped spray 22A having a narrow spread angle which are sprayed from the injection port 30 of the one-side injection port.

In the case of spray having a narrow spread angle of spray, the spread angle is small, so that the interference of the atomized particles is hardly caused. Therefore, in addition to the flat fan-shaped spray, conical spray is also available.

Furthermore, as the spray nozzles 13 of this embodiment, among the plurality of injection ports 30 and 31 installed at the leading edges of the spray nozzles 13, from the injection port for generating the spray pattern of the flat fan-shaped spray 22B having a wide spread angle of spray, for example, the injection port 31, as particles of the reductant to be sprayed, it is desirable to inject atomized particles with a small diameter. When the atomized particle diameter to be sprayed is small, the momentum of the atomized particles is small and the arrival distance is short. Therefore, the atomized particles stay in the vicinity of the wall surface of the furnace 1.

On the other hand, from the injection port for generating the spray pattern of the flat fan-shaped spray 22A having a narrow spread angle, for example, the injection port 30, as particles of the reductant to be sprayed, it is desirable to inject atomized particles with a large diameter.

When the atomized particle diameter to be sprayed is large, the momentum of the atomized particles is large and the arrival distance is long. Therefore, the atomized particles easily reach the central portion of the furnace 1.

In the combustion apparatus provided with the spray nozzles of this embodiment, the case that combustion air is divided and supplied from the burners 2 and the air supply ports 7 is shown, though even in the case that the combustion air is all supplied from the burners 2, the effect of the spray nozzles 13 in this embodiment is the same.

According to this embodiment, a combustion apparatus provided with the spray nozzles for enabling to spread the atomized particles containing the reductant over a wide range in the furnace, uniformly mix the combustion gas passing through the inside of the furnace with the reductant, promote a reaction of the reductant to the combustion gas, and reduce the amount of nitrogen oxide discharged from the combustion apparatus can be realized.

### {Industrial Applicability}

The present invention can be applied to a combustion apparatus provided with spray nozzles used in a combustion apparatus such as a power generation boiler for burning fuel.

### {Reference Signs List}

1: Furnace, 2: Burner, 3: Combustion air supply system, 4: Fuel supply system, 5, 6: Pipe, 7: Air supply port, 8, 9: Combustion gas flow, 10: Heat exchanger, 11: Gas duct, 12: Chimney, 13: Spray nozzle, 14: Reductant supply system, 15: Tank, 16: Boost pump, 17: Flow rate regulator, 22, 22A, 22B: Flat fan-shaped spray, 30, 31: Injection port, 32 to 35: Flow path of spray fluid, 36, 37: Groove, 10, 40, 41: Heat exchanger, 50: Control unit, 51: NOX concentration detector

## Claims

1. A combustion apparatus comprising: a furnace (1),
burners (2) installed on a wall surface of a furnace (1) for burning the fossil fuel,
fuel supply system (4) arranged to supply fuel to the burner (2),
combustion gas supply system (3) arranged to supply combustion gas (8) to the burner (2) and into the furnace (1),
a heat exchanger (10) installed in the furnace (1) for exchanging heat between the combustion gas (8) and water or steam,
and a gas duct (11) for discharging the combustion gas (8) after heat exchanger (10) from the furnace (1),
wherein:
reductant supply system (14) for supplying liquid reductant to reduce nitrogen oxide contained in the combustion gas (8) is arranged,
spray nozzles (13) for spraying the reductant supplied from the reductant supply system (14) as atomized particles spreading into combustion gas (8) passing through the inside of the furnace (1) are installed on a wall surface of the furnace (1) on a downstream side of the burner (2), and
a spray port (13) for spraying the atomized particles of the reductant sprayed in the furnace (1) so as to form a spread shape thereof in a flat fan-shape (22B) is installed at a leading edge of the spray nozzle (13).

2. A combustion apparatus comprising:
a furnace (1),
burners (2) installed on a wall surface of a furnace (1) for burning the fossil fuel,
fuel supply system (4) arranged to supply fuel to the burners (2),
combustion gas supply system (3) arranged to supply combustion gas (8) to the burner (2) and into the furnace (1),
a heat exchanger (10) installed in the furnace (1) for exchanging between the combustion gas (8) and water or steam, and a gas duct (11) for discharging the combustion gas (8) after heat exchanger (10) from the furnace (1),
wherein:
reductant supply system (14) for supplying liquid reductant to reduce nitrogen oxide contained in the combustion gas (8) is arranged,
spray nozzles (13) for spraying the reductant supplied from the reductant supply system (14) as atomized particles spreading into combustion gas (8) passing through the inside of the furnace (1) are installed on a wall surface of the furnace (1) on a downstream side of the burner (2), and
a plurality of spray ports (30, 31) for spraying the atomized particles of the reductant sprayed into the furnace (1) so as to form spread shapes thereof in a flat fan-shape (22B) are installed at the leading edge of the spray nozzles (13) and the plurality of spray ports (30, 31) are structured so as to have different angles of spread in a flat fan-shape (22B) which is a spread shape of the sprayed atomized particles.

3. The combustion apparatus according to Claim 1, wherein:
the spray nozzle (13) is arranged with a plurality of pipes (32-35) for permitting the reductant to pass through internally, and the plurality of pipes (32-35) are arranged to form a V-shape in the vicinity of the leading edge of the spray nozzle (13) so as to join in an injection port (30, 31) formed at the leading edge of the spray nozzle (13).

4. The combustion apparatus according to Claim 2, wherein:
the spray nozzle (13) is arranged with a plurality of pipes (32-35) for permitting the reductant to pass through internally, and the plurality of pipes (32-35) are arranged to form a first V-shape in the vicinity of the leading edge of the spray nozzle (13) so as to join in a first injection port (30, 31) installed at the leading edge of the spray nozzle (13) and
in the spray nozzle (13), a plurality of another pipes (32-35) for permitting the reductant to pass through are internally arranged and the plurality of another pipes (32-35) are arranged to form a second V-shape in the vicinity of the leading edge of the spray nozzle (13) so as to join in a second injection port (30, 31) formed at the leading edge of the spray nozzle (13), and
an angle (α1) for forming the first V-shape and an angle (α2) for forming the second V-shape are structured so as to be different from each other.

5. The combustion apparatus according to Claim 4, wherein:
a first groove (36) internally including the first injection port (30) and a second groove (37) internally including the second injection port (31) are respectively installed at the leading edge of the spray nozzle (13).

6. The combustion apparatus according to Claim 2 or 4, wherein:
with respect to the flat fan-shaped spread angle in a spread shape of the atomized particles sprayed from the plurality of spray ports (30, 31) installed at the leading edge of the spray nozzle (13), a fan-shaped spread angle (α1) having a narrow spread angle is set to 30° to 80° and a fan-shaped spread angle (α2) having a wide spread angle is set to 90° to 160°.

7. The combustion apparatus according to Claim 6, wherein:
the flat fan shape in the spread shape of the atomized particles sprayed from the plurality of spray ports (30, 31) installed at the leading edge of the spray nozzle (13) is formed so that a flat thickness becomes about 1/3 or less of a maximum fan-shaped spread width.

8. The combustion apparatus according to any one of Claims 2 to 4, wherein:
the atomized particles sprayed from the plurality of spray ports (30, 31) installed at the leading edge of the spray nozzle (13) for respectively forming the flat fan shape are sprayed as atomized particles that a particle diameter of the atomized particles sprayed so as to form a flat fan shape (22B) of a narrow spread angle (α1) from a one-side spray port (30) is coarser than a particle diameter of the atomized particles sprayed so as to form a flat fan shape (22B) of a wide spread angle (α2) from an other-side spray port (31).

9. The combustion apparatus according to Claim 1 or 2, wherein:
the atomized particles with a particle diameter of about 200 µm to 500 µm of the atomized particles sprayed so as to form a flat fan shape (22B) of a narrow spread angle (α1) are used and the atomized particles with a particle diameter of about 50 µm to 150 µm of the atomized particles sprayed so as to form a flat fan shape (22B) of a wide spread angle (α2) are used.

10. The combustion apparatus according to Claim 1 or 2, wherein:
the combustion gas supply system (3) is connected to the burner (2) and a combustion gas supply port installed on the wall surface of the furnace (1) on the downstream side of the burner (2) and the combustion gas supplied from the combustion gas supply system (3) is supplied into the furnace (1) respectively from the burner (2) and the combustion gas supply port, and
the spray nozzle (13) is installed on the wall surface of the furnace (1) positioned between the burner (2) and the combustion gas supply port.

11. The combustion apparatus according to Claim 1 or 2, wherein:
the combustion gas supply system (3) is connected to the burner (2) and a combustion gas supply port installed on the wall surface of the furnace (1) on the downstream side of the burner (2) so as to supply the combustion gas into the furnace respectively from the burner (2) and the combustion gas supply port,
a plurality of the heat exchangers (10, 40, 41) are installed away from each other on an upper part of the furnace (1), and
the spray nozzle (13) is installed on the wall surface of the furnace (1) between a plurality of heat exchangers (10, 40, 41) where a temperature of the combustion gas is 900°C to 1100°C.

12. The combustion apparatus according to Claim 1 or 2, wherein:
a pressure spray-type nozzle for atomizing the reductant to atomized particles by pressure of a fluid is used as the spray nozzle (13).
